# EUROPEAN PATENT SPECIFICATION

(11) **EP 2 758 661 B1**
(45) Date of publication and mention of the grant of the patent: **05.10.2016**
(21) Application number: 12737897.4
(22) Date of filing: 29.06.2012
(51) Int. Cl.: F03D 80/00, F03D 7/02, F03D 1/00, F03D 80/70, F03D 80/80, F03D 15/00, F03D 9/00

(54) **A POWER GENERATING APPARATUS OF RENEWABLE ENERGY TYPE**
VORRICHTUNG ZUR STROMERZEUGUNG AUS ERNEUERBARER ENERGIE
APPAREIL DE GÉNÉRATION D'ÉLECTRICITÉ À ÉNERGIE RENOUVELABLE

(30) Priority: 22.09.2011 WO PCT/JP2011/071676; 30.11.2011 WO PCT/JP2011/077625; 30.11.2011 WO PCT/JP2011/006695; 15.02.2012 WO PCT/JP2012/001004; 24.02.2012 WO PCT/JP2012/054617
(43) Date of publication of application: 30.07.2014
(73) Proprietor: Mitsubishi Heavy Industries, Ltd., Tokyo 108-8215 (JP)
(72) Inventor: KAMEDA, Takuro, Tokyo 108-8215 (JP); FURUKAWA, Syogo, Tokyo 108-8215 (JP)
(74) Representative: Intès, Didier Gérard André
(86) International application number: PCT/JP2012/004218
(87) International publication number: WO 2013/042294

(56) References cited:
- WO-A2-2011/051369
- DE-A1-102008 052 412
- US-A1- 2012 134 811

## Description

### [Technical Field]

The present invention relates to a power generating apparatus of renewable energy type which generates power from renewable energy. The power generating apparatus of renewable energy type, for instance, includes a wind turbine generator, a tidal generator, an ocean current generator, a river current generator or the like.

### [Background Art]

In recent years, from a perspective of preserving the environment, it has become popular to use a power generating apparatus of renewable energy type such as a wind turbine generator utilizing wind power and a power generating apparatus utilizing tidal current, ocean current or river current. In the power generating apparatus of renewable energy type, the kinetic energy of the wind, tidal current, river current or the like is converted to the rotational energy of the rotor and the rotation energy of the rotor is then converted into electric power by the generator.

From a perspective of improving power generation efficiency, the power generating apparatus of renewable energy type tends to increase in size, resulting in increased load on a rotor. To solve this, proposed is a power generating apparatus of renewable energy type in which the rotor is supported by the nacelle via a pair of bearings.

For instance, wind turbine generators of patent documents EP 1878917 A, US 2011/0266806 A, WO 2009/080712 A, US 6759758 B, US 2011/0143380 A, TW 201126062 A, KR 10-2011-0070623 B, JP 2009-19625 A and DE 10 2008 052412 A1are configured such that the rotor is supported on the nacelle side via a pair of bearings consisting of a front bearing nearer to the hub and a rear bearing farther from the hub. Further, the three latter documents further disclose to provide an integral bearing housing for the front and rear bearings.

### [Summary of Invention]

### [Technical Problem]

However, power inputted from the renewable energy source to the rotor constantly changes and a complex load including a bending load acts on the rotor. Thus, it is desired for the bearings supporting the rotor under this severe condition to function over a long period of time. Further, in such a case that the rotor is supported on the nacelle side by a pair of bearings, the complex load acting on the rotor can deform a structure around the bearing. This leads to misalignment of a center of each of the bearings. The misalignment of the center of each of the bearings can generate load component in unexpected direction acting on each of the bearings, resulting in significant decline of the life of the bearing. Therefore, it is desired to use a support structure of the bearing, which can maintain alignment of centers of the pair of bearings.

In this aspect, the wind turbine generators disclosed in KR 10-2011-0070623 B, JP 2009-19625 A and DE 10 2008 052412 A1 are each configured with the bearing housing integrally housing the front and bear bearings. The bearing housing contributes to maintaining the alignment of the centers of the front and rear bearings and thus, the bearing could possibly last for its expected life.

However, in the wind turbines disclosed in KR 10-2011-0070623 B, JP 2009-19625 A and DE 10 2008 052412 A1, the integral bearing housing of the front and rear bearings occupies a significant part of a space in the nacelle. Thus, it is difficult to utilize a limited space in the nacelle.

In view of the above conditions, at least one embodiment of the present invention is intended to provide a power generating apparatus of renewable energy type which is capable of maintaining a concentricity between the bearings and utilizing the space in the nacelle.

### [Solution to Problem]

According to an embodiment of the present invention, a power generating apparatus of a renewable energy type which generates power from renewable energy, the apparatus including, but not limited to:
a blade;
a hub which rotates with the blade by the renewable energy received via the blade;
a rotation shaft which is coupled to the hub;
a pair of bearings, including a front bearing arranged on a hub side and a rear bearing arranged farther from the hub than the front bearing, which support the rotation shaft rotatably;
a nacelle which includes a nacelle base supporting a bearing housing of each of the pair of bearings from below; and
a connection frame which connects upper parts of the bearing housings of the pair of bearings.

The power generating apparatus of the renewable energy type may include three or more bearings.

In the above power generating apparatus of the renewable energy type, the bearing housings of the pair of bearings for supporting the rotation shaft are supported from below by the nacelle base and the upper parts of the bearing housings are connected to each other by the connection frame. Furthermore, the nacelle base includes a horizontal plate part extending horizontally, a wall part installed on the horizontal plate part, and a rib extending along a direction perpendicular to an axial direction of the rotation shaft between a pair of inner surfaces of the wall part that face each other across the rotation shaft, wherein a bearing housing of the front bearing is supported from below by a portion of the wall part on the hub side, and a bearing housing of the rear bearing may be supported from below by the rib. Thus, the bearing housing of each bearing is held in place by the nacelle base and the connection frame and thus, it is possible to maintain concentricity between the bearings. By using the above nacelle base, the bearing housings of the front bearing and the rear bearing can be supported firmly from below by the wall part of the nacelle base and the rib, respectively.

Further, the space in the nacelle occupied by the connection frame for connecting the upper parts of the bearing housings is small compared to a case of integrating the bearing housing of each bearing as described in KR 10-2011-0070623 B and JP 2009-19625 A. Thus, it is possible to utilize space inside the nacelle. Further, the bearing housings of the front and rear bearings are supported at a place higher than the horizontal plate, thereby creating a space between the rotation shaft and a nacelle floor surface, compared with the nacelle disclosed in DE 10 2008 052412 A1. This space under the rotation shaft can be used as a space where the workers perform maintenance on devices in the nacelle.

In an embodiment, the power generating apparatus of the renewable energy type may further include :
a driven device which is attached to an end of the rotation shaft that is farther from the hub and is supported by the nacelle base and which is driven by the rotation shaft,
the front bearing may be a radial bearing without a self-aligning function, and the rear may be a thrust bearing without a self-aligning function and arranged on a driven-device side.

Further, the front bearing as a radial bearing without a self-aligning function may be a double row cylindrical roller bearing and the rear bearing as a thrust bearing without a self-aligning function may be a double row tapered roller bearing.

A bearing with the self-aligning function can be used even when there is a relative angle between the outer ring and the inner ring caused by deflection of a shaft, and is capable of being loaded with a radial load, thrust loads from both directions and combined radial and thrust loads and thus, the bearing with the self-aligning function is ideal for receiving vibration and impact loads. However, when complex and excessive load is inputted from the renewable energy source to the rotation shaft, the inner ring moves relative to the outer ring due to backlash of the self-aligning bearing. This can causes vibration of the driven device attached to the end of the rotation shaft as well as an entire rotor system. Therefore, by using the bearings without the self-aligning function as described above, it is possible to contribute to reduction of the vibration of the entire rotor system and the driven device. In the case where the rotation shaft is rotatably supported by the pair of bearings without the self-aligning function, misalignment of a center of each bearing is unacceptable as each bearing has no self-aligning function. Therefore, in the case of using the bearing without the self-aligning function, the bearing housing of each bearing is held in place using the nacelle base and the connection frame. By this, the life of the bearing is significantly improved compared to the case of using the self-aligning bearing.

Further, in the case where the rotation shaft is supported rotatably by the pair of bearings (the front bearing and the rear bearing), a thrust bearing which is capable of receiving the load along the axial direction of the rotation shaft may be used as one of the bearings and a radial bearing which is capable of receiving the load along the radial direction of the rotation shaft may be used as the other of the bearings. In this case, by using the thrust bearing as the rear bearing disposed on a driven device side, it is possible to reduce a distance between the thrust bearing and the driven device, which is a standard of expansion of the rotation shaft. Thus, it is possible to suppress relative displacement between the driven device and the nacelle base caused by the expansion of the rotation shaft. The expansion of the rotation shaft is, for instance, thermal expansion of the rotation shaft being heated by heat conducted from the driven device side and heated generated from the bearing itself. By this, it is possible to reduce the risk of damaging a support member and pipings by excessive load acting on the support member, the pipings or the equipments arranged between the driven device and the nacelle base, the excessive load being caused by the relative displacement between the driven device and the nacelle base.

In one embodiment, the connection frame may include a connection plate part and a support part, the connection plate part being arranged above the rotation shaft and connecting the upper parts of the bearing housings of the pair of bearings, the support part supporting the connection plate part to the nacelle base on both sides of the rotation shaft, and
the connection plate part may include an attachment part via which a component transferring mechanism for transferring a transfer-object component is attached to the connection frame.

The use of the above connection frame contributes to maintaining concentricity between the bearings by connecting the upper parts of the bearing housings of the pair of bearings. Further, in the case where the component transferring mechanism is attached to the attachment part of the connection plate part, the load of the component transferring mechanism can be supported by the support part.

In one embodiment,
the rotation shaft may include a first region where the front bearing is attached and a second region where the rear bearing is attached, the rotation shaft decreasing in diameter from a first-region side toward a second-region side,
in the first region, a first stepped portion may be formed to restrict movement of an inner ring of the front bearing toward the hub side,
in the second region, a second stepped portion may be formed to restrict movement of an inner ring of the rear bearing toward the hub side, and
an inner diameter of the inner ring of the front bearing may be greater than a maximum diameter at the second stepped portion.

In the case where the rotation shaft is supported by the pair of bearings, the front bearing being closer to the hub receives larger load than the rear baring. Thus, the rotation shaft is configured to decrease in diameter from the first region side toward the second region side. Thus, the front bearing larger in size than the rear bearing is used to improve durability of the front bearing. With the diameter of the rotation shaft being comparatively smaller around the second region, the weight of the rotation shaft is reduced and the rear bearing is reduced in weight and size.

Further, the first stepped portion for restricting movement of the inner ring toward the hub side the second stepped portion for restricting movement of the inner ring toward the hub side are provided in the first and second regions, respectively, and the inner diameter of the inner ring of the front bearing is set greater than a maximum diameter of the rotation shaft at the second stepped portion. By this, it is possible to fit and assemble the front bearing and the rear bearing in this order from the end of the rotation shaft on the side opposite to the hub. This facilitates an assembling operation of assembling the front bearing and the rear bearing to the rotation shaft.

In one embodiment, the power generating apparatus of the renewable energy type may further include:
a tower which supports the nacelle via a yaw bearing; and
a nacelle deck plate which covers a base opening formed in a center of the horizontal plate part of the nacelle base, and
the nacelle deck plate may have a deck opening formed in at least a part of a region which is between the front bearing and the rear bearing and which avoids the rotation shaft, and
an interior of the nacelle may communicate with an interior of the tower via the deck opening.

In this manner, by forming the deck opening in the nacelle deck plate formed in the center of the horizontal plate part of the nacelle base for covering the base opening, the transfer-object component can be transported via the deck opening between the interior of the nacelle and the interior of the tower, for instance. In one embodiment, from a perspective of efficient transportation operation by utilizing the space above the rotation shaft within the nacelle where it is comparatively spacious, the transfer-object component may be transported between the interior of the nacelle and the interior of the tower through the deck opening in such a state that the transfer-object component is suspended from over the rotation shaft by the component transferring mechanism 54. As described above, as a path for the transfer-object component to pass through, the deck opening is formed in at least a part of a region which is between the front bearing and the rear bearing and which avoids the rotation shaft. By this, it is possible to prevent the transfer-object component from interfering with the rotation shaft and the bearings during the transportation between the interior of the nacelle and the interior of the tower.

In one embodiment, the connection frame may be arranged to avoid lying over at least a part of the deck opening so that the part of the deck opening is exposed and is not overlapped with the connection frame.

By this, when the transfer-object component is transported through the deck opening between the interior of the nacelle and the interior of the tower while being suspended from over the connection frame, it is possible to prevent the interference between the transfer-object component and the connection frame.

In one embodiment, the rotation shaft may include a first region where the front bearing is attached and a second region where the rear bearing is attached, the rotation shaft decreasing in diameter from a first-region side toward a second-region side, and
the rotation shaft may have approximately the same diameter as the second region at an axial position corresponding to the deck opening.

By configuring the rotation shaft to decrease in diameter from the first region side toward the second region side, the front bearing larger in size than the rear bearing can be used to improve durability of the front bearing. With the diameter of the rotation shaft being comparatively smaller around the second region, the weight of the rotation shaft is reduced and the rear bearing is reduced in weight and size.

Further, by making the diameter of the rotation shaft approximately the same as the second region at an axial position corresponding to the deck opening, it is possible to secure comparative large area for the deck opening which is used to move the transfer-object component between the interior of the nacelle and the interior of the tower while being suspended above the rotation shaft.

In one embodiment, the power generating apparatus of the renewable energy type may further include:
a tower which supports the nacelle via a yaw bearing, and
the yaw bearing may have an inner diameter D not less than 3 meters and not greater than 5 meters,
the front bearing may be arranged outside a circular region surrounded by the yaw bearing and between the circular region and the hub,
the rear bearing may be arranged between a center axis of the yaw bearing and a position which is 0.25D away from the center axis toward a side opposite to the hub, and in the center axis of the yaw bearing, a vertical distance from a bottom surface of the rotation shaft to the horizontal plate part may be not less than 2 meters and not greater than 4 meters.

In the large-scale power generating apparatus of the renewable energy type where the inner diameter of the yaw ring is approximately 3 to 5 meters, it is necessary to keep a certain distance between the bearings to withstand the large load applied on each bearing (particularly the front bearing). On the other hand, if the distance between the bearings is excessively great, it leads to increased weights of the rotation shaft, the nacelle and the like. This results in cost increase.

Thus, the front bearing is arranged outside a circular region surrounded by the yaw bearing and between the circular region and the hub, the rear bearing is arranged between a center axis of the yaw bearing and a position which is 0.25D away from the center axis toward a side opposite to the hub, it is possible to achieve both durability of the bearings (particularly the front bearing) and suppression of the weight increase of the rotation shaft, the nacelle and the like. Further, the above described arrangement of the front bearing and the rear bearing creates a distance of a few meters between the bearings. Thus, as the vertical distance in the center axis of the yaw bearing is 2 to 4 meters from the bottom surface of the rotation shaft to the horizontal plate part, it is possible to secure comparatively large space between the front bearing and the rear bearing as well as between the rotation shaft and the horizontal plate part. This space can be utilized, for instance, for the maintenance operation performed by workers on devices in the nacelle. Further, by displacing the center of the bearing rearward from the axial center of the yaw bearing, it is possible to reduce moment received by the yaw bearing and generated by the hub weight or wind pressure and also to make the yaw bearing compact in design.

In one embodiment, a distance between the front bearing and the rear bearing may be not less than 0.8L and not greater than 1.0L where L is a distance between a center of the hub and the front bearing along an axial direction of the rotation shaft.

By setting the distance between the front bearing and the rear bearing not less than 0.8L and not greater than 1.0L, it is possible to achieve both durability of the bearings (particularly the front bearing) and suppression of the weight increase of the rotation shaft, the nacelle and the like.

In one embodiment, a distance between a center of the hub and the center axis of the yaw bearing may be not less than 1.55L and not greater than 1.85L where L is a distance between the center of the hub and the front bearing along an axial direction of the rotation shaft.

By setting the distance (an overhand amount) between the center of the hub and the center axis of the yaw bearing at 1.55L to 1.85L, it is possible to prevent the blade from coming into contact with the tower. Further, by setting the overhang amount at 1.85L or less, it is possible to suppress the load acting on the bearings.

In one embodiment, the power generating apparatus of the renewable energy type may further include:
a hydraulic pump which is attached to the rotation shaft and which is driven by the rotation shaft;
at least one hydraulic motor which is driven by pressurized oil from the hydraulic pump; and
at least one generator which is connected to the at least one hydraulic motor, and
the hydraulic pump may be attached to an end of the rotation shaft that is farther from the hub,
the at least one hydraulic motor and the at least one generator may be arranged lateral to the rotation shaft and the hydraulic pump.

Further, in one embodiment, the power generating apparatus of the renewable energy type may be a wind turbine generator which generates power from wind in a form of the renewable energy.

### Advantageous Effects of Invention

According to at least one embodiment of the present invention, the bearing housing of each of the bearings is held in place by the nacelle base and the connection frame and thus, it is possible to maintain concentricity between the bearings. Further, the space in the nacelle occupied by the connection frame for connecting the upper parts of the bearing housings is relatively small and thus, it is possible to utilize space inside the nacelle.

### Brief Description of Drawings

[fig.1]Fig 1 is a schematic view of an overall structure of a wind turbine generator.
[fig.2]Fig. 2 is an oblique perspective view of an example of a structure inside a nacelle of the wind turbine generator.
[fig.3]Fig. 3 is an oblique perspective view of an example of a structure of a nacelle base.
[fig.4]Fig. 4 is an oblique perspective view showing a bearing housing installed to the nacelle base of Fig.3.
[fig.5]Fig. 5 is a cross-sectional view taken along a line A-A of Fig.4.
[fig.6]Fig. 6 is a plain view taken from a direction B of Fig.4.

### Description of Embodiments

At least one embodiment of the present invention will now be described in detail with reference to the accompanying drawings. It is intended, however, that unless particularly specified, dimensions, materials, shape, its relative positions and the like shall be interpreted as illustrative only and not limitative of the scope of the present invention.

In following embodiments, a wind turbine generator is described as one example of a power generating apparatus of renewable energy type. However, this is not limitative and the present invention is applicable to other types of power generating apparatus of renewable energy type such as a tidal generator, an ocean current generator and a river current generator.

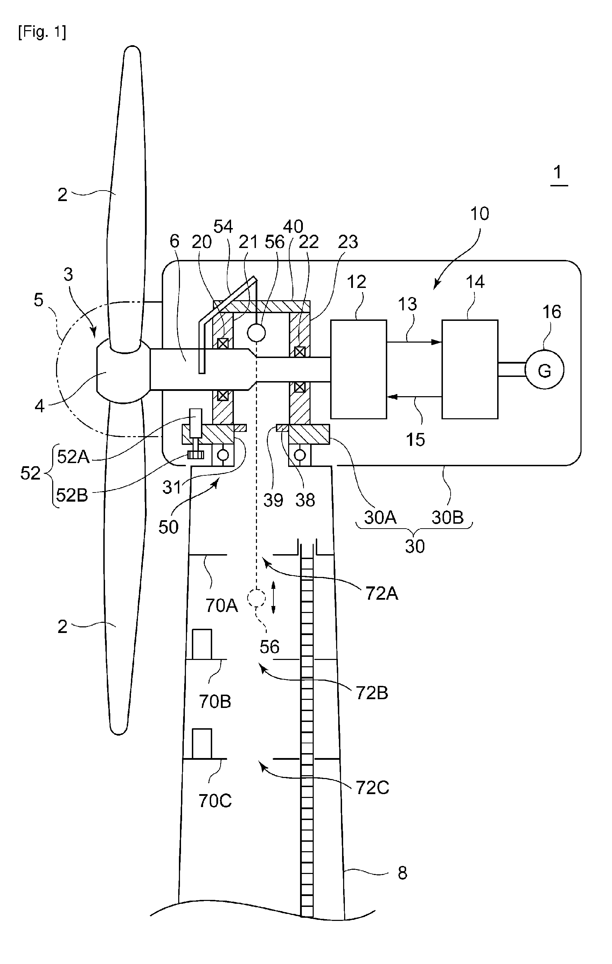

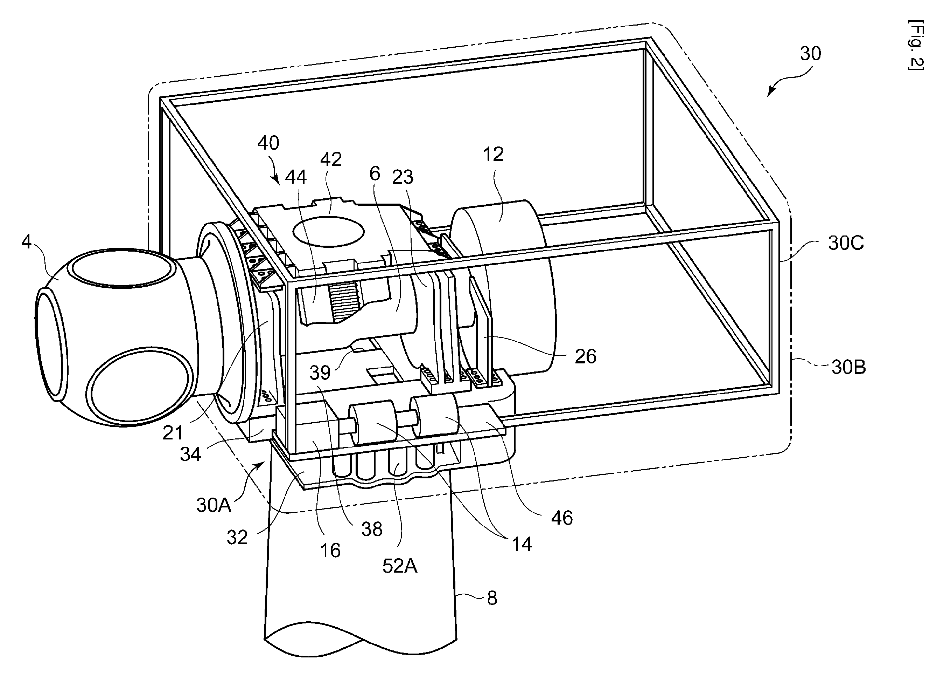

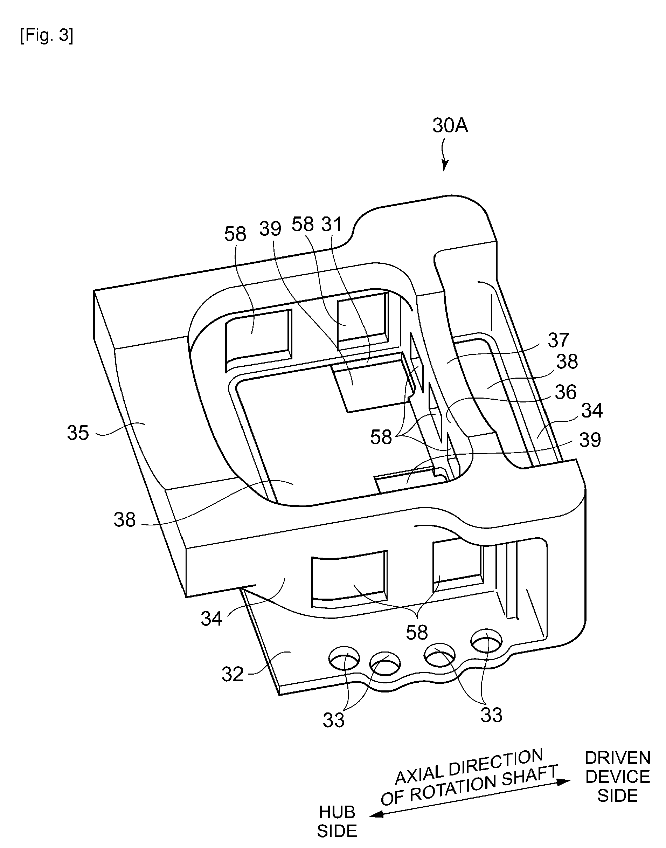

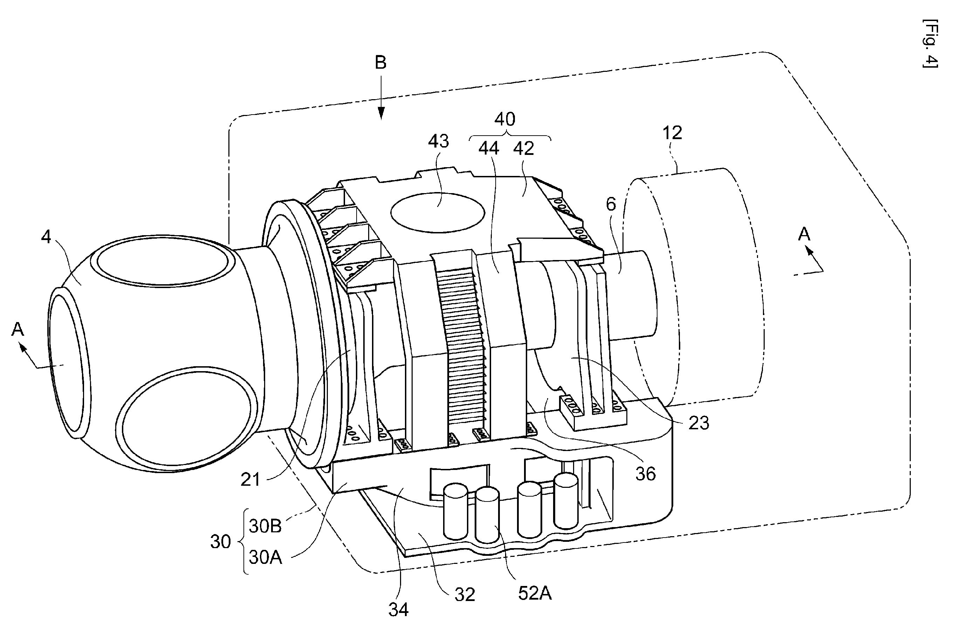

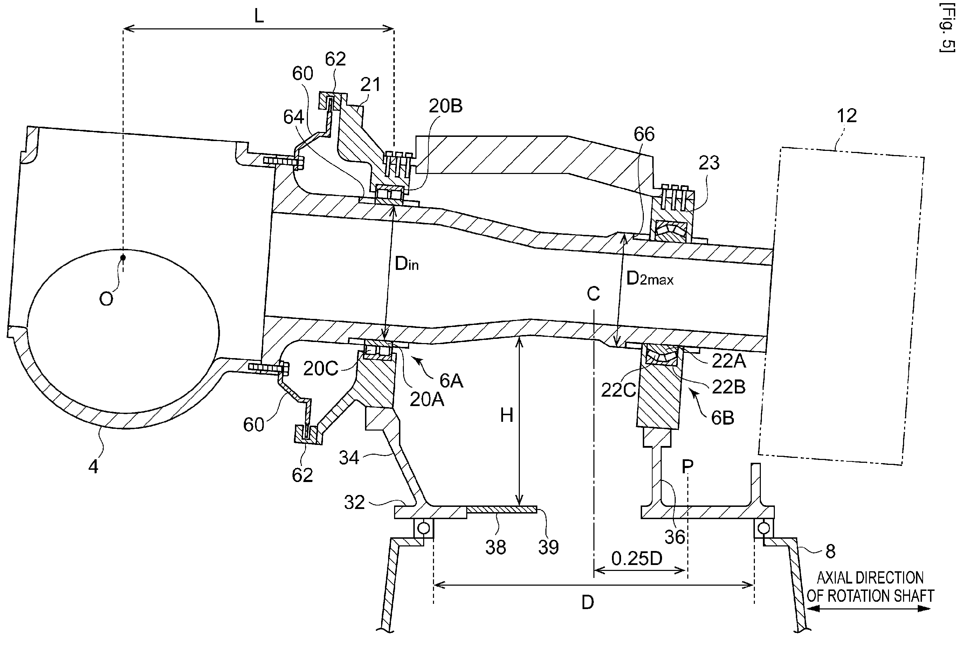

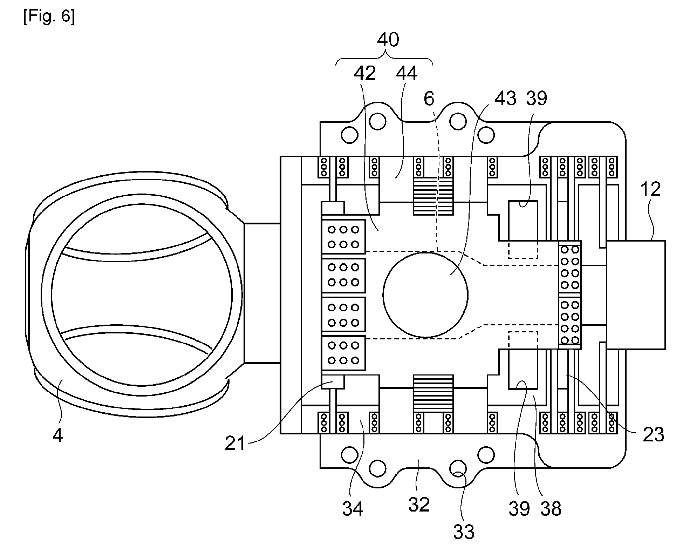

Fig. 1 is a schematic view of an overall structure of a wind turbine generator. Fig. 2 is an oblique perspective view of an example of a structure inside a nacelle of the wind turbine generator. Fig. 3 is an oblique perspective view of an example of a structure of a nacelle base. Fig. 4 is an oblique perspective view showing a bearing housing installed to the nacelle base of Fig.3. Fig. 5 is a cross-sectional view taken along a line A-A of Fig.4. Fig. 6 is a plain view taken from a direction B of Fig.4.

As shown in Fig. 1, a wind turbine generator 1 is provided with a rotor 3 constituted by a blade 2 and a hub 4, a rotation shaft 6 coupled to the hub 4 of the rotor 3, a pair of bearings (a front bearing 20 and a rear bearing 22) rotatably supporting the rotation shaft 6, and a nacelle 30 including a nacelle base 30A supporting a bearing housing 21, 23 of each of the bearings from below.

The hub 4 is covered by a hub cover 5. The nacelle 30 is arranged on a tower 8 installed on the ocean or on the ground.

In one embodiment, the wind turbine generator 1 may generate power in a generator 16 by inputting rotation energy of the rotation shaft 6 to the generator 16 via a drive train 10.

In the example illustrated in Fig. 1, the drive train 10 includes a hydraulic pump 12 attached to the rotation shaft 6 and a hydraulic motor 14 connected to the hydraulic pump 12 via a high-pressure oil line 13 and a low pressure oil line 15. The hydraulic pump 12 is driven by the rotation shaft 6 to pressurized operating oil, thereby generating high pressure operating oil (pressurized oil). An outlet of the hydraulic pump 12 is connected to an inlet of the hydraulic motor 14 via the high-pressure oil line 13. Thus, the pressurized oil generated by the hydraulic pump 12 is supplied to the hydraulic motor 14 via the high-pressure oil line 13 and the hydraulic motor 14 is driven by the pressurized oil, generating low-pressure operating oil. The low pressure operating oil having worked in the hydraulic motor 14 is then returned to the hydraulic pump 12 via the low-pressure oil line 15 arranged between an outlet of the hydraulic motor 14 and an inlet of the hydraulic pump 12. Further, an output shaft of the hydraulic motor 14 is connected to a rotation shaft of the generator 16 to input rotation of the hydraulic motor 14 to the generator 16.

The number of the hydraulic pump 12, the hydraulic motor 14 and the generator is not particularly limited as long as at least one of each is provided.

As shown in Fig. 2, the hydraulic pump 12 may be attached to an end of the rotation shaft 6 which is farther from the hub 4, whereas the hydraulic motor 14 and the generator 16 may be provided on both sides of the rotation shaft 6. Fig.2, however, shows a set of the hydraulic motors 14 and the generator 16 only on one side. In the example shown in Fig.2, the hydraulic pump 12 attached to the end of the rotation shaft 6 is supported by the nacelle base 30A via a support arm 26. Further, a pair of device-mounting plate is provided on both sides of the rotation shaft 6. Fig.2, however, shows only one of the device-mounting plates 46 on one side of the rotation shaft 6. On each device-mounting plate 46, a pair of hydraulic motors 14 and the generator 16 are installed. The device-mounting plate 46 is supported by the nacelle base 30A and a nacelle frame 30C attached to the nacelle base plate 30A.

Under the device-mounting plate 46, a horizontal plate part 32 of the nacelle base 30A extends almost horizontally. On the horizontal plate part 32, a yaw motor 52A of a yaw turning mechanism 52 is provided. In Fig.2, pipings (the high-pressure oil line 13 and the low-pressure oil line 15) between the hydraulic pump 12 and the hydraulic motor 14 are not shown.

The nacelle 30 is supported by the tower 8 via a yaw bearing 50 as shown in Fig.1, so that the nacelle 30 is driven by the yaw turning mechanism 52 fixed to the nacelle base 30A to turn the nacelle 30. The yaw turning mechanism 52 is formed by at least one yaw motor 52A and at least one pinion gear 52B attached to the corresponding yaw motor 52A. On the tower 8, a ring gear not shown is provided. The ring gear meshes with the pinion gears 52B. By this, the pinion gears 52B rotated by the yaw motors 52A causes the nacelle base 30A to turn relative to the tower 8. Fig. 1 shows the example in which the yaw turning mechanism 52 is fixed to the nacelle base plate. Alternatively, the yaw turning mechanism 52 may be attached to the tower 8. In that case, the pinion gears 52B of the yaw turning mechanism 52 mesh with the ring gear provided in the nacelle base 30A.

As shown in Fig.2, the nacelle 30 includes the nacelle base 30A for supporting the bearing housing 21, 23 housing each of the bearings 20, 22 from below, a nacelle cover 30B for covering a variety of devices placed on the nacelle base 30A and a nacelle frame 30C to which the nacelle cover 30B is fixed. The nacelle base 30A is, for instance, formed of a casting such as spherical graphite cast iron and high-duty cast iron.

The structure of the nacelle base is not limited as long as it is configured to support the bearing housings 21, 23 of the bearings 20, 22 from below. For instance, as shown in Fig.3, the nacelle base including the horizontal plate part 32 extending horizontally, a wall part 34 installed on the horizontal plate part 32, and a rib 36 extending along a direction perpendicular to an axial direction of the rotation shaft 6, may be used. In the wall part 34 and the rib 36, at least one manhole 58 may be formed so that workers can move through.

In the example shown in Fig.3, the horizontal plate part 32 projects outward along side wall portions of the side wall parts 34 disposed on both sides of the rotation shaft 6 and holes 33 for holding the yaw motors 52A of the yaw turning mechanism 52 are formed therein.

In the horizontal plate part 32, a base opening 31 is formed along an inner circumference of the wall part 34. The base opening 31 is covered by a nacelle deck plate 38. The nacelle deck plate 38 is used as a scaffold for workers to perform maintenance of the devices in the nacelle thereon. In the nacelle deck plate 38, a deck opening 39 is formed. Via the deck opening, an interior of the nacelle 30 and an interior of the tower 8 communicate. This allows for transportation of a transfer-object component 56 through the deck opening 39 using a component transferring mechanism 54 in the nacelle 30 as shown in Fig.1. The deck opening 39 may be closable as needed. For instance, the deck opening 39 may be opened only when the transfer-object component 56 is transported via the deck opening 39.

In one embodiment, the deck opening 39 of the nacelle deck plate 38 is formed in at least a part of a region between the front bearing 20 and the rear bearing 22, avoiding the rotation shaft 6. In other words, in Fig.6 illustrating the interior of the nacelle 30 from the direction of the arrow B of Fig.4, the deck opening 39 is disposed between the front bearing 20 and the rear bearing 22 and is not completely covered by the rotation shaft 6, leaving at least part of the deck opening exposed.

By this, the transfer-object component 56 can be transported between the interior of the nacelle 30 and the interior of the tower 8 using the component transferring mechanism 54 while utilizing the space over the rotation shaft 6 inside the nacelle where it is relatively spacious. More specifically, the transfer-object component 56 can be transported between the interior of the nacelle 30 and the interior of the tower 8 while avoiding interference with the rotation shaft 6 and the bearing housing 21, 23 in such a state that the transfer-object component is suspended over the rotation shaft 6 by the component transferring mechanism 54.

Inside the tower 8, a plurality of floor openings 72A through 72C may be formed on floors 70A through 70C, respectively, at a position corresponding to a moving path of the deck opening 39 during turning of the nacelle 30. By this, the transfer-object component 56 can be transported in the tower 8 through the floor openings 72A to 72C while being suspended by the component transferring mechanism 54 disposed in the nacelle 30 as shown in Fig.1.

As shown in Fig.3, a concave portion 35 is formed on the hub side in the wall part 34 of the nacelle base 30A. In the concave portion 35, a lower part of the bearing housing 21 of the front bearing is engaged. In a similar manner, another concave portion 37 is formed in the rib. In the concave portion 37, a lower part of the bearing housing 23 of the rear bearing 22 is engaged. The bearing housings 21, 23 engaged in the concave portions 35, 37 are fastened to the nacelle base 30A (an upper surface of the wall part 34) at both sides of the bearing housings 21, 23. Thus, as shown in Fig.4 to Fig.6, the bearing housing 21 is supported from below by the wall part 34 and fastened to the nacelle base 30A while the bearing housing 23 is supported from below by the rib 36 and fastened to the nacelle base 30A. Therefore, the lower parts of the bearing housings 21, 23 are held in place by the nacelle base 30A.

Meanwhile, upper parts of the bearing housings 21, 23 are connected to each other by a connection frame 40 and are held in place by the connection frame 40.

In this manner, each of the bearing housings 21, 23 is held in place by the nacelle base 30A and the connection frame 40 and thus, it is possible to maintain concentricity between the bearings 20, 22. Further, in comparison with the integral bearing housing disclosed in Patent Literatures 7 and 8, it is possible to utilize the space within the nacelle 30 by using the connection frame 40.

The connection frame 40 may include a connection plate part 42 and a pair of support parts 44 as shown in Fig.4 to Fig.6. The connection plate part 42 is arranged above the rotation shaft 6 to connect the upper parts of the bearing housings 21, 23 and includes an attachment part 43 for the component transferring mechanism such as a crane. The pair of support parts 44 supports the connection plate part 42 to the nacelle base 30A on both sides of the rotation shaft 6. By this, the upper parts of the bearing housings 21, 23 are connected to each other by the connection plate part 42, thereby contributing to maintaining the concentricity between the bearings 20, 22. Further, in the case of attaching the component transferring mechanism to the attachment part 42 provided in the connection plate part 42, the support part 44 is capable of supporting the load of the component transferring mechanism.

The attachment part 43 may be configured such that a jib of a crane as the component transferring mechanism can be fixed using an arbitrary fastening member. The support part 44 may also function as stairs for workers to move up and down.

In an embodiment, the connection frame 40 is arranged as shown in Fig.6 to avoid lying over at least a part of the deck opening 39 so that the part of the deck opening is exposed and is not overlapped with the connection frame 40.

By this, when the transfer-object component 56 is transported between the interior of the nacelle 30 and the interior of the tower 8 through the deck opening 39 in such a state that the transfer-object component 56 is suspended from over the connection frame 40 by the component transferring mechanism 54, it is possible to avoid interference between the transfer-object component 56 and the connection frame 40.

The structures of the front bearing 20 and the rear bearing 22 are described in details below.

The front bearing 20 is configured, as shown in Fig. 5, that a rolling element 20C is held between an inner ring 20A and an outer ring 20B and the front bearing 20 is housed in the bearing housing 21. In a similar manner, the rear bearing 22 is configured that a rolling element 22C is held between an inner ring 22A and an outer ring 22B and is housed in the bearing housing 23.

As shown in Fig.5, in the bearing housing 21 of the front bearing 20, a plurality of brake calipers is provided to brake the rotation shaft by gripping a brake disk 60 fastened to the hub by fastening the brake disk with a flange of the rotation shaft 6.

The specific structures of the front bearing 20 and the rear bearing 22 are not particularly limited as long as it is configured to support the rotation shaft 6 rotatably. The front and rear bearings 20, 22 may be a combination selected according to required specification from a variety of bearings (e.g. a radial bearing or a thrust bearing).

For instance, in the case of attaching the hydraulic pump (a driven device) 12 to the rotation shaft 6, both the front bearing 20 on the hub side and the rear bearing 22 on the hydraulic pump side may be formed by bearings which have substantially no self-aligning function. Bearings with a self-aligning function have weaker constraint force between the inner ring and the outer ring and thus, when the complex load is inputted from the wind in a form of the renewable energy to the rotation shaft 6, the inner ring moves relative to the outer ring. This can causes vibration of the hydraulic pump 12 attached to the end of the rotation shaft 6. Therefore, by using the bearings without the self-aligning function as described above, it is possible to contribute to reduction of the vibration of the hydraulic pump. This also applies to the case where the generator 16 is attached to the end of the rotation shaft 6 and using of the bearing without the self-aligning function as the front bearing 20, 22, contributes to reduction of the vibration of the generator 16.

Further, in the case where the hydraulic pump (a driven device) 12 is attached to an end of the rotation shaft 6 that is farther from the hub 4 and the driven device 26 is supported by the nacelle base 30A of the nacelle 30, the front bearing 20 on the hub side may be a radial bearing and the rear bearing 22 on the hydraulic pump side may be a thrust bearing. In this manner, by using the thrust bearing as the rear bearing 22 disposed on the hydraulic pump side, it is possible to reduce a distance between the thrust bearing and the hydraulic pump 12, which is a standard of expansion of the rotation shaft 6. Thus, it is possible to suppress relative displacement between the hydraulic pump 12 and the nacelle base 30A caused by the expansion of the rotation shaft 6. The expansion of the rotation shaft is, for instance, thermal expansion of the rotation shaft being heated by heat generated from the hydraulic pump side 12 and the bearing itself (20, 22). By this, it is possible to reduce the risk of damaging a support member (the support arm 26), pipings (the high-pressure oil line 13 and the low-pressure oil line 15) or the like by excessive load acting on the support member, the pipings or the like between the hydraulic pump 12 and the nacelle base 30A, the excessive load being caused by the relative displacement between the hydraulic pump 12 and the nacelle base 30A. This applies to the case where, instead of the hydraulic pump 12, the generator 16 is attached to the end of the rotation shaft 6 and is supported by the support arm 26 to the nacelle base 30A. By using the thrust bearing as the rear bearing 22, it is possible to reduce the risk of damaging the support member (the support arm 26) between the hydraulic pump 12 and the nacelle base 30A caused by the expansion of the rotation shaft 6.

Fig.5 shows the case where the front bearing in a form of the radial bearing without the self-aligning function is a double row cylindrical roller bearing and the rear bearing 22 in a form of the thrust bearing without the self-aligning function is a double row tapered roller bearing.

In the example shown in Fig.5, the rotation shaft 6 includes a first region 6 A where the front bearing 20 is attached and a second region where the rear bearing 22 is attached. The rotation shaft 6 decreases in diameter from the first region side toward the second region side. Thus, the front bearing 20 larger in size than the rear bearing 22 is used to improve durability of the front bearing 20. With the diameter of the rotation shaft 6 being comparatively smaller around the second region 6B, the weight of the rotation shaft 6 is reduced and the rear bearing 22 is reduced in weight and size. Further, in the first region 6A, a first stepped portion 64 is formed to restrict movement of the inner ring 20A toward the hub side, and in the second region 6B, a second stepped portion 66 is formed to restrict movement of the inner ring 22A toward the hub side, and an inner diameter Dᵢₙ of the inner ring 20A of the front bearing 20 is greater than a maximum diameter D₂ₘₐₓ of the rotation shaft 6 at the second stepped portion. By this, it is possible to fit and assemble the front bearing 20 and the rear bearing 22 in this order from the end of the rotation shaft 6 on the side opposite to the hub 4. This facilitates an assembling operation of assembling the front bearing 20 and the rear bearing 22 to the rotation shaft 6.

Further, the rotation shaft 6 may have approximately the same diameter as the second region 6B at an axial position corresponding to the deck opening 39 of the nacelle deck plate 38. By this, it is possible to secure comparative large area for the deck opening 39 which is used to move the transfer-object component 56 between the interior of the nacelle 30 and the interior of the tower 8 while being suspended above the rotation shaft 6.

In the large-scale wind turbine generator 1 where the inner diameter of the yaw ring 50 is approximately 3 to 5 meters, it is necessary to keep a certain distance between the bearings 20, 22 to withstand the large load applied on each bearing (particularly the front bearing 20). On the other hand, if the distance between the bearings 20, 22 is excessively great, it leads to increased weights of the rotation shaft 6, the nacelle 30 and the like. This results in cost increase.

Therefore, in the case where the inner diameter D of the yaw ring 50 is approximately 3 to 5 meters (see Fig. 5), the front bearing 20 may be arranged outside a circular region surrounded by the yaw bearing 50 and between the circular region and the hub 4, and the rear bearing 22 may be arranged between a center axis C of the yaw bearing 50 and a position P which is 0.25D away from the center axis C toward a side opposite to the hub 4, and in the center axis C, a vertical distance H from a bottom surface of the rotation shaft 6 to the horizontal plate part 32 may be 2 to 4 meters. By this, it is possible to achieve both durability of the bearings (particularly the front bearing 20) and suppression of the weight increase of the rotation shaft 6, the nacelle 30 and the like. Further, the above described arrangement of the front bearing 20 and the rear bearing 22 creates a distance of a few meters between the bearings 20, 22.

Thus, as the vertical distance H in the center axis C of the yaw bearing 50 is 2 to 4 meters from the bottom surface of the rotation shaft 6 to the horizontal plate part 32, it is possible to secure comparatively large space between the front bearing 20 and the rear bearing 22 as well as between the rotation shaft 6 and the horizontal plate part 32. This space can be utilized, for instance, for the maintenance operation performed by workers on devices in the nacelle.

The distance between the front bearing 20 and the rear bearing 22 is 0.8L to 1.0L where L is a distance between a center O of the hub 4 and the front bearing 20 along an axial direction of the rotation shaft 6. By this, it is possible to achieve both durability of the bearings (particularly the front bearing 20) and suppression of the weight increase of the rotation shaft 6, the nacelle 30 and the like.

Further, the distance between the center O of the hub 4 and the center axis C of the yaw bearing 50 may be 1.55L to 1.85L where L is the distance between the center O of the hub 4 and the front bearing 20 along the axial direction of the rotation shaft 6.

By setting the distance (an overhand amount) between the center O of the hub 4 and the center axis C of the yaw bearing 50 at 1.55L to 1.85L, it is possible to prevent the blade 2 from coming into contact with the tower 8. Further, by setting the overhang amount at 1.85L or less, it is possible to suppress the load acting on the bearings 20, 22.

While the present invention has been described with reference to the exemplary embodiments, it is obvious to those skilled in the art that various changes may be made without departing from the scope of the invention.

For instance, in the above embodiments, the hydraulic pump 12 is attached to the end of the rotation shaft 6 that is farther from the hub 4. However, the position where the hydraulic pump 12 is attached to the rotation shaft 6 is not limited to this, and may be between the bearings 20, 22.

In the above embodiments, the drive train 10 includes the hydraulic pump 12 and the hydraulic motor 14. However, this is not limitative and the drive train 10 may include, instead of the hydraulic pump 1 2 and the hydraulic pump 14, a step-up gear arranged between the rotation shaft 6 and the generator 16. Further, the rotation energy of the rotation shaft 6 may be directly inputted to the generator 16 without inputting the rotation energy via the drive train 10. In this case, the rotation shaft 6 may be directly attached to the generator 16.

### Reference Signs List

- 1: Wind turbine generator
- 2: Blade
- 3: Rotor
- 4: Hub
- 5: Hub cover
- 6: Rotation shaft
- 8: Tower
- 10: Drive train
- 12: Hydraulic pump
- 13: High-pressure oil line
- 14: Hydraulic motor
- 15: Low-pressure oil line
- 16: Generator
- 20: Front bearing
- 20A: Inner ring
- 20B: Outer ring
- 20C: Rolling element
- 21: Bearing housing
- 22: Rear bearing
- 22A: Inner ring
- 22B: Outer ring
- 22C: Rolling element
- 23: Bearing housing
- 26: Support arm
- 30: Nacelle
- 30A: Nacelle base
- 30B: Nacelle cover
- 30C: Nacelle frame
- 31: Base opening
- 32: Horizontal plate part
- 33: Holes
- 34: Wall part
- 35: Concave portion
- 36: Rib
- 37: Concave portion
- 38: Nacelle deck plate
- 39: Deck opening
- 40: Connection frame
- 42: Connection plate part
- 44: Support part
- 46: Device-mounting plate
- 50: Yaw bearing
- 52A: Yaw turning mechanism
- 52A: Yaw motor
- 52B: Pinion gear
- 54: Component transferring mechanism
- 56: Transfer-object component
- 58: Manhole
- 60: Brake disk
- 62: Brake caliper
- 64: First stepped portion
- 66: Second stepped portion
- 70A to 70C: Floor
- 72A to 72C: Floor opening

## Claims

1. A power generating apparatus of a renewable energy type which generates power from renewable energy, the apparatus comprising:
a blade (2);
a hub (4) which rotates with the blade by the renewable energy received via the blade (2);
a rotation shaft (6) which is coupled to the hub (4);
a pair of bearings (20,22) which support the rotation shaft (6) rotatably, the pair of bearings (20,22) being provided separately from each other and including includes a front bearing (20) arranged on a hub side and a rear bearing (22) arranged farther from the hub than the front bearing (20); a nacelle (30) which includes a nacelle base (30A) supporting bearing housings (21,23) of the pair of bearings (20,22) from below; and
a connection frame (40) which connects upper parts of the bearing housings (21,23) of the pair of bearings (20,22) provided separately from each other;
and **characterized in that**:
the nacelle base (30A) includes a horizontal plate part (32) extending horizontally, a wall part (34) installed on the horizontal plate part (32), and a rib (36) extending along a direction perpendicular to an axial direction of the rotation shaft (6) between a pair of inner surfaces of the wall part (34) that face each other across the rotation shaft (6),
a bearing housing (21) of the front bearing (20) is supported from below by a portion of the wall part (34) on the hub side, and
a bearing housing (23) of the rear bearing (22) is supported from below by the rib (36).

2. The power generating apparatus of the renewable energy type, according to claim 1, further comprising:
a driven device which is attached to an end of the rotation shaft (6) that is farther from the hub (4) and is supported by the nacelle base (30A) and which is driven by the rotation shaft (6),
wherein the front bearing (20) is a radial bearing without a self-aligning function, and the rear bearing (22) is a thrust bearing without a self-aligning function and is arranged on a driven-device side.

3. The power generating apparatus of the renewable energy type according to claim 2,
wherein the front bearing (20) is a double row cylindrical roller bearing and the rear bearing (22) is a double row tapered roller bearing.

4. A power generating apparatus of a renewable energy type according to claim 1,
wherein the connection frame (40) includes a connection plate part (42) and a support part (44), the connection plate part (42) being arranged above the rotation shaft (6) and connecting the upper parts of the bearing housings (21,23) of the pair of bearings (20,22), the support part (44) supporting the connection plate part (42) to the nacelle base (30A) on both sides of the rotation shaft (6), and
wherein the connection plate part (42) includes an attachment part via which a component transferring mechanism (54) for transferring a transfer-object component (56) is attached to the connection frame (40).

5. The power generating apparatus of the renewable energy type according to claim 1,
wherein the rotation shaft (6) includes a first region where the front bearing (20) is attached and a second region where the rear bearing (22) is attached, the rotation shaft (6) decreasing in diameter from a first-region side toward a second-region side,
wherein, in the first region, a first stepped portion (64) is formed to restrict movement of an inner ring (20A) of the front bearing (20) toward the hub side,
wherein, in the second region, a second stepped portion (66) is formed to restrict movement of an inner ring (22A) of the rear bearing (22) toward the hub side, and
wherein an inner diameter of the inner ring (20A) of the front bearing (20) is greater than a maximum diameter at the second stepped portion (66).

6. The power generating apparatus of the renewable energy type according to claim 1, the apparatus further comprising:
a tower (8) which supports the nacelle (30) via a yaw bearing (50); and
a nacelle deck plate (38) which covers a base opening (31) formed in a center of the horizontal plate part (32) of the nacelle base (30A),
wherein the nacelle deck plate (38) has a deck opening (39) formed in at least a part of a region which is between the front bearing (20) and the rear bearing (22) and which avoids the rotation shaft (6), and
wherein an interior of the nacelle (30) communicates with an interior of the tower (8) via the deck opening (39).

7. The power generating apparatus of the renewable energy type according to claim 6,
wherein the connection frame (40) is arranged to avoid lying over at least a part of the deck opening (39) so that the part of the deck opening (39) is exposed and is not overlapped with the connection frame (40).

8. The power generating apparatus of the renewable energy type according to claim 6,
wherein the rotation shaft (6) includes a first region where the front bearing (20) is attached and a second region where the rear bearing (22) is attached, the rotation shaft (6) decreasing in diameter from a first-region side toward a second-region side, and
wherein the rotation shaft (6) has approximately the same diameter as the second region at an axial position corresponding to the deck opening (39).

9. The power generating apparatus of the renewable energy type according to claim 1, the apparatus further comprising:
a tower (8) which supports the nacelle (30) via a yaw bearing (50),
wherein the yaw bearing (50) has an inner diameter D not less than 3 meters and not greater than 5 meters,
wherein the front bearing (20) is arranged outside a circular region surrounded by the yaw bearing (50) and between the circular region and the hub (4),
wherein the rear bearing (22) is arranged between a center axis of the yaw bearing (50) and a position which is 0.25D away from the center axis toward a side opposite to the hub (4), and
wherein, in the center axis of the yaw bearing (50), a vertical distance from a bottom surface of the rotation shaft (6) to the horizontal plate part (32) is not less than 2 meters and not greater than 4 meters.

10. The power generating apparatus of the renewable energy type according to claim 9,
wherein a distance between the front bearing (20) and the rear bearing (22) is not less than 0.8L and not greater than 1.0L where L is a distance between a center of the hub (4) and the front bearing (20) along an axial direction of the rotation shaft.

11. The power generating apparatus of the renewable energy type according to claim 9,
wherein a distance between a center of the hub (4) and the center axis of the yaw bearing (50) is not less than 1.55L and not greater than 1.85L where L is a distance between the center of the hub (4) and the front bearing (20) along an axial direction of the rotation shaft (6).

12. The power generating apparatus of the renewable energy type according to claim 1, further comprising:
a hydraulic pump (12) which is attached to the rotation shaft (6) and which is driven by the rotation shaft (6);
at least one hydraulic motor (14) which is driven by pressurized oil from the hydraulic pump (12); and
at least one generator (16) which is connected to the at least one hydraulic motor (14),
wherein the hydraulic pump (12) is attached to an end of the rotation shaft (6) that is farther from the hub (4),
wherein the at least one hydraulic motor (14) and the at least one generator (16) are arranged lateral to the rotation shaft (6) and the hydraulic pump (12).

13. The power generating apparatus of the renewable energy type according to claim 1,
wherein the power generating apparatus of the renewable energy type is a wind turbine generator (1) for generating power from wind in a form of the renewable energy.

## Patentansprüche

1. Energieerzeugungsvorrichtung vom Typ für erneuerbare Energie, die Leistung aus erneuerbarer Energie gewinnt, wobei die Vorrichtung umfasst:
einen Flügel (2),
eine Nabe (4), die sich durch die über den Flügel (2) empfangene erneuerbare Energie mit dem Flügel dreht,
eine Drehwelle (6), die mit der Nabe (4) gekoppelt ist,
ein Paar Lager (20, 22), die die Drehwelle (6) drehbar stützen, wobei das Paar Lager (20, 22) separat voneinander angeordnet ist und ein vorderes Lager (20) enthält, das auf einer Nabenseite angeordnet ist, und ein hinteres Lager (22) enthält, das weiter von der Nabe entfernt angeordnet ist als das vordere Lager (20),
eine Gondel (30), die eine Gondelbasis (30A) enthält, die Lagergehäuse (21, 23) des Lagerpaares (20, 22) von unten her stützt, und
einen Verbindungsrahmen (40), der obere Teile der Lagergehäuse (21, 23) des Lagerpaares (20, 22) verbindet, die separat voneinander angeordnet sind, und
**dadurch gekennzeichnet, dass**:
die Gondelbasis (30A) einen horizontalen Plattenteil (32), der sich horizontal erstreckt, einen Wandteil (34), der an dem horizontalen Plattenteil (32) montiert ist, und eine Rippe (36) enthält, die sich entlang einer Richtung senkrecht zu einer axialen Richtung der Drehwelle (6) zwischen einem Paar Innenflächen des Wandteils (34), die einander über die Drehwelle (6) hinweg zugewandt sind, erstreckt,
ein Lagergehäuse (21) des vorderen Lagers (20) von unten her durch einen Abschnitt des Wandteils (34) auf der Nabenseite gestützt wird, und
ein Lagergehäuse (23) des hinteren Lagers (22) von unten her durch die Rippe (36) gestützt wird.

2. Energieerzeugungsvorrichtung vom Typ für erneuerbare Energie nach Anspruch 1, ferner umfassend:
eine angetriebene Vorrichtung, die an einem Ende der Drehwelle (6) angebracht ist, das weiter von der Nabe (4) entfernt ist und durch die Gondelbasis (30A) gestützt wird und die durch die Drehwelle (6) angetrieben wird,
wobei das vordere Lager (20) ein Radiallager ohne Selbstausrichtungsfunktion ist und das hintere Lager (22) ein Schublager ohne Selbstausrichtungsfunktion ist und auf einer Seite der angetriebenen Vorrichtung angeordnet ist.

3. Energieerzeugungsvorrichtung vom Typ für erneuerbare Energie nach Anspruch 2, wobei das vordere Lager (20) ein doppelreihiges Zylinderrollenlager ist und das hintere Lager (22) ein doppelreihiges Schrägrollenlager ist.

4. Energieerzeugungsvorrichtung vom Typ für erneuerbare Energie nach Anspruch 1,
wobei der Verbindungsrahmen (40) einen Verbindungsplattenteil (42) und einen Stützteil (44) enthält, wobei der Verbindungsplattenteil (42) über der Drehwelle (6) angeordnet ist und die oberen Teile der Lagergehäuse (21, 23) des Lagerpaares (20, 22) verbindet, und wobei der Stützteil (44) den Verbindungsplattenteil (42) an der Gondelbasis (30A) auf beiden Seiten der Drehwelle (6) stützt, und
wobei der Verbindungsplattenteil (42) einen Befestigungsteil enthält, über den ein Komponententransfermechanismus (54) zum Transferieren einer Transferobjektkomponente (56) an dem Verbindungsrahmen (40) angebracht ist.

5. Energieerzeugungsvorrichtung vom Typ für erneuerbare Energie nach Anspruch 1,
wobei die Drehwelle (6) eine erste Region enthält, wo das vordere Lager (20) angebracht ist, und eine zweite Region enthält, wo das hintere Lager (22) angebracht ist, wobei der Durchmesser der Drehwelle (6) von einer Seite der ersten Region in Richtung einer Seite der zweiten Region abnimmt,
wobei, in der ersten Region, ein erster gestufter Abschnitt (64) ausgebildet ist, um eine Bewegung eines inneren Rings (20A) des vorderen Lagers (20) in Richtung der Nabenseite zu verhindern,
wobei, in der zweiten Region, ein zweiter gestufter Abschnitt (66) ausgebildet ist, um eine Bewegung eines inneren Rings (22A) des hinteren Lagers (22) in Richtung der Nabenseite zu verhindern, und
wobei ein Innendurchmesser des inneren Rings (20A) des vorderen Lagers (20) größer ist als ein größter Durchmesser an dem zweiten gestuften Abschnitt (66).

6. Energieerzeugungsvorrichtung vom Typ für erneuerbare Energie nach Anspruch 1, wobei die Vorrichtung ferner umfasst:
einen Turm (8), der die Gondel (30) über ein Azimutlager (50) stützt, und
eine Gondeldeckplatte (38), die eine Basisöffnung (31) bedeckt, die in einer Mitte des horizontalen Plattenteils (32) der Gondelbasis (30A) ausgebildet ist, wobei die Gondeldeckplatte (38) eine Decköffnung (39) hat, die in mindestens einem Teil einer Region ausgebildet ist, die zwischen dem vorderen Lager (20) und dem hinteren Lager (22) liegt und die die Drehwelle (6) vermeidet, und
wobei ein Inneres der Gondel (30) mit einem Inneren des Turmes (8) über die Decköffnung (39) in Verbindung steht.

7. Energieerzeugungsvorrichtung vom Typ für erneuerbare Energie nach Anspruch 6,
wobei der Verbindungsrahmen (40) dafür ausgelegt ist, es zu vermeiden, über mindestens einem Teil der Decköffnung (39) zu liegen, dergestalt, dass der Teil der Decköffnung (39) frei liegt und nicht von dem Verbindungsrahmen (40) überlappt wird.

8. Energieerzeugungsvorrichtung vom Typ für erneuerbare Energie nach Anspruch 6,
wobei die Drehwelle (6) eine erste Region enthält, wo das vordere Lager (20) angebracht ist, und eine zweite Region enthält, wo das hintere Lager (22) angebracht ist, wobei der Durchmesser der Drehwelle (6) von einer Seite der ersten Region in Richtung einer Seite der zweiten Region abnimmt, und
wobei die Drehwelle (6) an einer axialen Position, die der Decköffnung (39) entspricht, ungefähr den gleichen Durchmesser hat wie die zweite Region.

9. Energieerzeugungsvorrichtung vom Typ für erneuerbare Energie nach Anspruch 1, wobei die Vorrichtung ferner umfasst:
einen Turm (8), der die Gondel (30) über ein Azimutlager (50) stützt,
wobei das Azimutlager (50) einen Innendurchmesser D von nicht weniger als 3 Metern und nicht größer als 5 Metern hat,
wobei das vordere Lager (20) außerhalb einer kreisförmigen Region, die von dem Azimutlager (50) umgeben ist, und zwischen der kreisförmigen Region und der Nabe (4) angeordnet ist,
wobei das hintere Lager (22) zwischen einer Mittelachse des Azimutlagers (50) und einer Position angeordnet ist, die 0,25 D von der Mittelachse in Richtung einer Seite gegenüber der Nabe (4) entfernt liegt, und
wobei, in der Mittelachse des Azimutlagers (50), eine vertikale Entfernung von einer Unterseite der Drehwelle (6) zu dem horizontalen Plattenteil (32) nicht weniger als 2 Meter und nicht größer als 4 Meter ist.

10. Energieerzeugungsvorrichtung vom Typ für erneuerbare Energie nach Anspruch 9,
wobei eine Entfernung zwischen dem vorderen Lager (20) und dem hinteren Lager (22) nicht weniger als 0,8 L und nicht größer als 1,0 L ist, wobei L eine Entfernung zwischen einer Mitte der Nabe (4) und dem vorderen Lager (20) entlang einer axialen Richtung der Drehwelle ist.

11. Energieerzeugungsvorrichtung vom Typ für erneuerbare Energie nach Anspruch 9,
wobei eine Entfernung zwischen einer Mitte der Nabe (4) und der Mittelachse des Azimutlagers (50) nicht weniger als 1,55 L und nicht größer als 1,85 L ist, wobei L eine Entfernung zwischen der Mitte der Nabe (4) und dem vorderen Lager (20) entlang einer axialen Richtung der Drehwelle (6) ist.

12. Energieerzeugungsvorrichtung vom Typ für erneuerbare Energie nach Anspruch 1, ferner umfassend:
eine Hydraulikpumpe (12), die an der Drehwelle (6) angebracht ist und die durch die Drehwelle (6) angetrieben wird,
mindestens einen Hydraulikmotor (14), der durch druckbeaufschlagtes Öl von der Hydraulikpumpe (12) angetrieben wird, und
mindestens einen Generator (16), der mit dem mindestens einen Hydraulikmotor (14) verbunden ist,
wobei die Hydraulikpumpe (12) an einem Ende der Drehwelle (6) angebracht ist, die weiter von der Nabe (4) entfernt ist,
wobei der mindestens eine Hydraulikmotor (14) und der mindestens eine Generator (16) seitlich von der Drehwelle (6) und der Hydraulikpumpe (12) angeordnet sind.

13. Energieerzeugungsvorrichtung vom Typ für erneuerbare Energie nach Anspruch 1,
wobei die Energieerzeugungsvorrichtung vom Typ für erneuerbare Energie ein Windturbinengenerator (1) zum Erzeugen von Elektrizität aus Wind in Form der erneuerbaren Energie ist.

## Revendications

1. Appareil de génération d'énergie du type à énergie renouvelable qui génère de la puissance à partir d'une énergie renouvelable, l'appareil comportant :
une pale (2) ;
un moyeu (4) qui tourne avec la pale grâce à l'énergie renouvelable reçue par l'intermédiaire de la pale (2) ;
un arbre de rotation (6) qui est couplé au moyeu (4) ;
une paire de paliers (20, 22) qui supportent l'arbre de rotation (6) de façon rotative, les paliers (20, 22) de la paire étant prévus séparément l'un de l'autre et comprenant un palier avant (20) disposé sur un côté de moyeu et un palier arrière (22) disposé plus loin du moyeu que le palier avant (20) ; une nacelle (30) qui comprend une base de nacelle (30A) supportant des logements de paliers (21, 23) de la paire de paliers (20, 22) par dessous ; et
un bâti de raccordement (40) qui relie des parties supérieures des logements de palier (21, 23) de la paire de paliers (20, 22) prévus séparément l'un de l'autre ; et
**caractérisé en ce que** :
la base de nacelle (30A) comprend une partie de plaque horizontale (32) s'étendant horizontalement, une partie de paroi (34) installée sur la partie de plaque horizontale (32), et une nervure (36) s'étendant le long d'une direction perpendiculaire à une direction axiale de l'arbre de rotation (6) entre une paire de surfaces intérieures de la partie de paroi (34) qui se font face de part et d'autre de l'arbre de rotation (6),
un logement de palier (21) du palier avant (20) est supporté par dessous par une partie de la partie de paroi (34) du côté de moyeu, et
un logement de palier (23) du palier arrière (22) est supporté par dessous par la nervure (36).

2. Appareil de génération d'énergie du type à énergie renouvelable, selon la revendication 1, comportant en outre :
un dispositif entraîné qui est fixé sur une extrémité de l'arbre de rotation (6) qui est plus loin du moyeu (4) et
est supporté par la base de nacelle (30A) et qui est entraîné par l'arbre de rotation (6),
dans lequel le palier avant (20) est un palier radial sans fonction d'auto-alignement, et le palier arrière (22) est un palier de butée sans fonction d'auto-alignement et est disposé sur un côté de dispositif entraîné.

3. Appareil de génération d'énergie du type à énergie renouvelable selon la revendication 2,
dans lequel le palier avant (20) est un roulement à rouleaux cylindriques à double rangée et le palier arrière (22) est un roulement à rouleaux coniques à double rangée.

4. Appareil de génération d'énergie du type à énergie renouvelable selon la revendication 1,
dans lequel le bâti de raccordement (40) comprend une partie de plaque de raccordement (42) et une partie de support (44), la partie de plaque de raccordement (42) étant disposée au-dessus de l'arbre de rotation (6) et reliant les parties supérieures des logements de palier (21, 23) de la paire de paliers (20, 22), la partie de support (44) supportant la partie de plaque de raccordement (42) sur la base de nacelle (30A) des deux côtés de l'arbre de rotation (6), et
dans lequel la partie de plaque de raccordement (42) comprend une partie de fixation par l'intermédiaire de laquelle un mécanisme de transfert de composant (54) pour le transfert d'un composant de transfert d'objet (56) est fixé sur le bâti de raccordement (40).

5. Appareil de génération d'énergie du type à énergie renouvelable selon la revendication 1,
dans lequel l'arbre de rotation (6) comprend une première zone où le palier avant (20) est fixé et une deuxième zone où le palier arrière (22) est fixé, l'arbre de rotation (6) diminuant en diamètre depuis un côté de première zone vers un côté de deuxième zone,
dans lequel, dans la première zone, une première partie étagée (64) est formée pour limiter un mouvement d'une bague intérieure (20A) du palier avant (20) vers le côté de moyeu,
dans lequel, dans la deuxième zone, une deuxième partie étagée (66) est formée pour limiter un mouvement d'une bague intérieure (22A) du palier arrière (22) vers le côté de moyeu, et
dans lequel un diamètre intérieur de la bague intérieure (20A) du palier avant (20) est plus grand qu'un diamètre maximum au niveau de la deuxième partie étagée (66).

6. Appareil de génération d'énergie du type à énergie renouvelable selon la revendication 1, l'appareil comportant en outre :
une tour (8) qui supporte la nacelle (30) par l'intermédiaire d'un palier de lacet (50) ; et
un plateau de nacelle (38) qui recouvre une ouverture de base (31) formée au centre de la partie de plaque horizontale (32) de la base de nacelle (30A),
dans lequel le plateau de nacelle (38) a une ouverture de plate-forme (39) formée dans au moins une partie d'une zone qui est entre le palier avant (20) et le palier arrière (22) et qui évite l'arbre de rotation (6), et
dans lequel un intérieur de la nacelle (30) communique avec un intérieur de la tour (8) par l'intermédiaire de l'ouverture de plate-forme (39) .

7. Appareil de génération d'énergie du type à énergie renouvelable selon la revendication 6,
dans lequel le bâti de raccordement (40) est prévu pour éviter de se trouver au-dessus d'au moins une partie de l'ouverture de plate-forme (39) de telle sorte que la partie de l'ouverture de plate-forme (39) est exposée et n'est pas chevauchée par le bâti de raccordement (40).

8. Appareil de génération d'énergie du type à énergie renouvelable selon la revendication 6,
dans lequel l'arbre de rotation (6) comprend une première zone où le palier avant (20) est fixé et une deuxième zone où le palier arrière (22) est fixé, l'arbre de rotation (6) diminuant de diamètre depuis un côté de première zone vers un côté de deuxième zone, et
dans lequel l'arbre de rotation (6) a approximativement le même diamètre que la deuxième zone au niveau d'une position axiale correspondant à l'ouverture de plate-forme (39).

9. Appareil de génération d'énergie du type à énergie renouvelable selon la revendication 1, l'appareil comportant en outre :
une tour (8) qui supporte la nacelle (30) par l'intermédiaire d'un palier de lacet (50),
dans laquelle le palier de lacet (50) a un diamètre intérieur D de pas moins de 3 mètres et de pas plus de 5 mètres,
dans lequel le palier avant (20) est disposé à l'extérieur d'une zone circulaire entourée par le palier de lacet (50) et entre la zone circulaire et le moyeu (4),
dans lequel le palier arrière (22) est disposé entre un axe central du palier de lacet (50) et une position qui est 0,25D à l'écart de l'axe central vers un côté opposé au moyeu (4), et
dans lequel, dans l'axe central du palier de lacet (50), une distance verticale depuis une surface inférieure de l'arbre de rotation (6) jusqu'à la partie de plaque horizontale (32) n'est pas inférieure à 2 mètres et pas supérieure à 4 mètres.

10. Appareil de génération d'énergie du type à énergie renouvelable selon la revendication 9,
dans lequel une distance entre le palier avant (20) et le palier arrière (22) n'est pas inférieure à 0,8L et pas supérieure à 1,0L où L est une distance entre un centre du moyeu (4) et le palier avant (20) le long d'une direction axiale de l'arbre de rotation.

11. Appareil de génération d'énergie du type à énergie renouvelable selon la revendication 9,
dans lequel une distance entre un centre du moyeu (4) et l'axe central du palier de lacet (50) n'est pas inférieure à 1,55L et pas supérieure à 1,85L où L est une distance entre le centre du moyeu (4) et le palier avant (20) le long d'une direction axiale de l'arbre de rotation (6).

12. Appareil de génération d'énergie du type à énergie renouvelable selon la revendication 1, comportant en outre :
une pompe hydraulique (12) qui est fixée sur l'arbre de rotation (6) et qui est entraînée par l'arbre de rotation (6) ;
au moins un moteur hydraulique (14) qui est entraîné par de l'huile sous pression provenant de la pompe hydraulique (12) ; et
au moins une génératrice (16) qui est reliée au au moins un moteur hydraulique (14),
dans lequel la pompe hydraulique (12) est fixée sur une extrémité de l'arbre de rotation (6) qui est plus loin du moyeu (4),
dans lequel le au moins un moteur hydraulique (14) et la au moins une génératrice (16) sont disposés de manière latéralement par rapport à l'arbre de rotation (6) et la pompe hydraulique (12).

13. Appareil de génération d'énergie du type à énergie renouvelable selon la revendication 1,
dans lequel l'appareil de génération d'énergie du type à énergie renouvelable est une éolienne (1) destinée à générer de l'énergie à partir du vent sous forme de l'énergie renouvelable.
